# EUROPÄISCHE PATENTSCHRIFT

(11) **EP 2 159 238 B1**
(45) Veröffentlichungstag und Bekanntmachung des Hinweises auf die Patenterteilung: **19.10.2011**
(21) Anmeldenummer: 09010582.6
(22) Anmeldetag: 18.08.2009
(51) Int. Cl.: C08G 18/02, C08G 18/42, C08G 18/79, C09D 175/06

(54) **Pulverlack**
Powder coating
Revêtement en poudre

(30) Priorität: 30.08.2008 DE 102008045224
(43) Veröffentlichungstag der Anmeldung: 03.03.2010
(73) Patentinhaber: Bayer MaterialScience AG, 51368 Leverkusen (DE)
(72) Erfinder: Grahl, Michael, 51371 Leverkusen (DE); Laas, Hans-Josef, Dr., 51519 Odenthal (DE); Büchner, Jörg, 51467 Bergisch Gladbach (DE)

(56) Entgegenhaltungen:
- EP-A- 0 553 750
- EP-A- 1 426 423
- EP-A- 1 942 124

## Beschreibung

Unter dem Druck einer zunehmend verschärften Umweltgesetzgebung gewann in den letzten Jahren die Entwicklung von Pulverlacken neben high-solids-Lacken und wässrigen Beschichtungssystemen zunehmend an Bedeutung. Pulverlacke setzen bei der Applikation keinerlei Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan-(PUR)-Pulverlacke bestehen im allgemeinen aus festen Polyesterpolyolen, die mit festen aliphatischen oder cycloaliphatischen Polyisocyanaten, im allgemeinen in blockierter Form ausgehärtet werden.

Für verschiedene Anwendungen, beispielsweise zur Beschichtung von Büromöbeln, Elektro- und Elektronikgeräten oder für rein dekorative Beschichtungen, besteht ein großes Interesse an Pulverlacken, die bei der Aushärtung matte Oberflächen ergeben. Auch für die Beschichtung von Fassadenteilen sind glänzende, stark reflektierende Lacksysteme häufig unerwünscht. Es hat daher nicht an Versuchen gefehlt, Pulvermattlacke auf PUR-Basis zu entwickeln.

Die Mitverwendung von feinteiligen mineralischen oder polymeren Mattierungsmitteln, eine bei Nasslacken gebräuchliche Methode zur Einstellung niedriger Glanzgrade, führt in Pulverlacksystemen im allgemeinen nicht zum gewünschten Erfolg.

Polyurethan-Pulverlacke, die sicher und reproduzierbar zu matten Beschichtungen aushärten, erhält man beispielsweise nach der Lehre der DE-A 33 38 129 aus Polyesterpolyolen in Kombination mit Pyromellithsäuredianhydrid und ε-Caprolactam-blockierten Polyisocyanaten auf Basis von 1-Isocyanato-3,3,5-trimethyl-5-isocyanatomethylcyclohexan (Isophorondiisocyanat; IPDI) als Vernetzerkomponente.

Matte Pulverbeschichtungen resultieren auch, wenn Hydroxylpolyester mit speziellen ε-Caprolactam-blockierten Derivaten von trans-1,4-Diisocyanatocyclohexan mit einem Schmelzbereich oberhalb 140° C, wie sie in der DE-A 37 11 374 beschrieben sind, oder mit ε-Caprolactam-blockierten hamstoffgruppenhaltigen Polyisocyanaten, wie sie entsprechend der Lehre der DE-A 37 39 479 durch Umsetzung teilblockierter Diisocyanate mit Di- oder Polyaminen erhalten werden können, vernetzt werden.

Die Verwendung von Kombinationen aus speziellen Carboxylgruppen aufweisenden blockierten Polyisocyanaten und Polyepoxidvemetzem, wie z. B. Triglycidylisocyanurat (TGIC), als Härterkomponente für pulverförmige hydroxyfunktionelle Bindemittel sind Gegenstand der DE-A 32 32 463. Diese "3-Komponenten"-Pulverlacksysteme ergeben nach dem Einbrennen hoch wetterbeständige Beschichtungen mit reproduzierbar einstellbaren Matteffekten.

Aus der HP-A 1 426 423 sind bereits Pulverlackzusammensetzungen zur Herstellung von Beschichtungen mit mattem Erscheinungsbild bekannt geworden, bei denen eine Carboxylgruppen und/oder Hydroxylgruppen enthaltende Polyesterkomponente, bestehend aus einem Gemisch amorpher und spezieller (scmi)kristalliner Polyester, mit unterschiedlichen Pulverlackvernetzern, wie z. B. Polyepoxiden, Hydroxyalkylamiden, blockierten Polyisocyanaten oder auch Uretdiongruppen enthaltenden Polyadditionsverbindungen, ausgehärtet wird. Diese Systeme erfordern allerdings sehr hohe Einbrenntemperaturen von mindestens 180°C.

Die PUR-Pulverlacke der genannten Vorveröffentlichungen härten zwar allesamt zu matten Oberflächen aus, ihnen gemeinsam ist jedoch der prinzipielle Nachteil, dass sie als Vernetzerkomponenten blockierte Polyisocyanate enthalten, die beim Einbrennvorgang das Blockierungsmittel als sogenannten Abspalter freisetzen und an die Umgebung abgeben. Bei ihrer Verarbeitung müssen daher aus Gründen der Ökologie und Arbeitshygiene besondere Vorkehrungen zur Reinigung der Abluft und/oder Wiedergewinnung des Blockierungsmittels getroffen werden.

Ein Versuch, diesen prinzipiellen Nachteil blockierter Polyisocyanate zu umgehen, ist in der Verwendung von blockierungsmittelfreien, linearen Uretdiongruppen-haltigen IPDI-Pulverlackhärtern zu sehen, bei denen die Vernetzung unter thermischer Rückspaltung der Uretdiongruppen erfolgt. Es wurde auch bereits versucht, solche abspalterfreien Uretdion-Pulverlackhärter zur Herstellung matter Beschichtungen einzusetzen.

Die DE-A 33 28 133 beschreibt beispielsweise Polyadditionsverbindungen auf Basis eines IPDI-Uretdions mit Schmelzpunkten oberhalb 130° C, vorzugsweise oberhalb 140° C, die in Kombination mit Polyesterpolyolen zu matten Filmen aushärten.

Nach der Lehre der EP-A 0 553 750 ergeben Pulverlacke, bestehend aus einem Gemisch zweier Hydroxylpolyester unterschiedlicher OH-Zahl und Reaktivität und kommerziell verfügbaren abspalterfreien Uretdion-Pulverlackvemetzem auf IPDI-Basis ebenfalls matte Überzüge.

Als "intern blockierte" Polyisocyanate gestatten Uretdion-Pulverlackvernetzer so zwar die Formulierung emissionsfreier Pulvermattlacke, diese benötigen jedoch zu ihrer Aushärtung ebenso wie die eingangs beschriebenen, blockierte Polyisocyanate enthaltenden Pulverlacke Temperaturen von mindestens 140° C, in der Regel sogar von mindestens 160° C.

Es war daher die der vorliegenden Erfindung zugrunde liegende Aufgabe, neue abspalterfreie PUR-Pulverlacke zur Verfügung zu stellen, die bei deutlich niedrigeren Einbrenntemperaturen als die bisher bekannten Pulverlacksysteme zu lösemittel- und chemikalienbeständigen Beschichtungen mit niedrigen Glanzgraden aushärten.

Diese Aufgabe konnte mit der Bereitstellung der nachstehend näher beschriebenen Pulverlacke gelöst werden, die unblockierte cycloaliphatische Polyisocyanate in mikronisierter Form in Kombination mit speziellen pulverförmigen Gemischen an sich bekannter hydroxyfunktioneller Bindemittelkomponenten enthalten.

Unblockierte Polyisocyanate, d. h. solche mit freien Isocyanatgruppen, sind ebenfalls bereits in der Vergangenheit als Vernetzer für Polyurethanpulverlacke vorgeschlagen worden.

Beispielsweise beschreiben die EP-A 0 193 828, EP-A 0 224 165 und EP-A 0 254 152 bei Raumtemperatur feste, Isocyanurat- und/oder Urethangruppen enthaltende Polyisocyanate mit freien, an tertiäre (cyclo)aliphatische Kohlenstoffatome gebundenen Isocyanatgruppen als Vernetzerkomponenten für PUR-Pulverlacke. Die Reaktionsträgheit der tertiär gebundenen Isocyanatgruppen ermöglicht zwar einerseits diese speziellen Polyisocyanate in unblockierter Form mit konventionellen hydroxyfunktionellen Pulverlackbindemitteln bei Temperaturen oberhalb ihres Schmelzpunktes zu vermischen, ohne dass eine unerwünschte Vorreaktion eintritt, andererseits führt die geringe Reaktivität aber auch dazu, dass für eine vollständige Aushärtung der so formulierten Pulverlacke vergleichsweise hohe Einbrenntemperaturen von mindestens 150° C, in der Regel sogar mindestens 170° C, benötigt werden.

Nach der Lehre der EP-A 0 669 351 können auch ganz "normale" verzweigte, feste Polyisocyanate mit unblockierten, an primäre und/oder sekundäre Kohlenstoffatome gebundenen Isocyanatgruppen als Pulverlackvernetzer Verwendung finden, wenn als Reaktionspartner spezielle Polyole eingesetzt werden, die zum überwiegenden Teil sterisch gehinderte und damit in ihrer Reaktivität gebremste, an sekundäre und/oder tertiäre Kohlenstoffatome gebundene Hydroxylgruppen aufweisen. Das Prinzip der Kombination fester unblockierter Polyisocyanate mit "langsamen", sekundär gebundene Hydroxylgruppen tragenden Pulverlackbindemitteln liegt auch den in der EP-A 0 780 416 beschriebenen PUR-Pulverlacksystemen zugrunde. Allerdings handelt es sich weder bei den Pulverlacken nach EP-B 0 669 351 noch nach denen der EP-A 0 780 416 um echte Niedrigtemperatur-vernetzende Systeme. In beiden Fällen erhält man erst ab Temperaturen oberhalb 140° C lösemittel- und chemikalienbeständige Beschichtungen, die darüber hinaus einen hohen Glanz aufweisen. Matte Beschichtungen lassen sich nach diesen Verfahren nicht herstellen.

Auch besitzen weder die vorstehend beschriebenen PUR-Pulverlacke auf Basis "langsamer" Polyisocyanate mit tertiär gebundenen Isocyanatgruppen als auch solche auf Basis "gebremster" Polyole mit überwiegend sekundär und/oder tertiär gebundenen Hydroxylgruppen eine für die Praxis ausreichende Lagerstabilität. Bereits bei Raumtemperatur ist eine schleichende Urethanisierungsreaktion zu beobachten, die zu einer vorzeitigen Vernetzung und Verklumpung der Lackpulver führt. Anders als die nachstehend näher beschriebenen erfindungsgemäßen Pulverlacke, die trotz eines hohen Gehaltes an freien Isocyanatgruppen selbst bei erhöhter Temperatur völlig lagerstabil sind, müssen die bisher bekannten, unter Verwendung unblockierter Polyisocyanate formulierten PUR-Pulverlacke in der Regel gekühlt, beispielsweise bei Temperaturen von unter 10° C, gelagert werden.

Gegenstand der vorliegenden Erfindung sind Pulverlacke, enthaltend
A) ein unblockiertes mikronisiertes Polyisocyanat auf Basis cycloaliphatischer Diisocyanate, das unterhalb 40° C fest und oberhalb 120° C flüssig ist und eine mittlere Teilchengröße d₅₀ von unter 10 µm aufweist,
B) eine pulverförmige Bindemittelkomponente einer mittleren Teilchengröße d₅₀ von unter 100 µm, bestehend zu 25 bis 75 Gew.-% aus mindestens einem amorphen Polyol B1) und zu 75 bis 25 Gew.-% aus mindestens einem kristallinen oder semi-kristallinen Polyol B2),
   sowie gegebenenfalls
C) weitere aus der Pulverlacktechnologie bekannte Hilfs- und Zusatzstoffe.

Gegenstand der Erfindung ist auch ein Verfahren zur Herstellung dieser Pulverlacke, welches dadurch gekennzeichnet ist, dass man
A) ein unblockiertes mikronisiertes Polyisocyanat auf Basis cycloaliphatischer Diisocyanate, das unterhalb 40° C fest und oberhalb 120° C flüssig ist und eine mittlere Teilchengröße dso von unter 10 µm aufweist, mit
B) einer pulverförmigen hydroxyfunktionellen Bindemittelkomponente, die durch Vermischen und gemeinsames Homogenisieren mindestens eines amorphen Polyols B1) mit mindestens einem kristallinen oder semi-kristallinen Polyol B2) in einem Gewichtsverhältnis von B1) zu B2) von 25 : 75 bis 75 : 25, gegebenenfalls unter Mitverwendung weiterer aus der Pulverlacktechnologie bekannter Hilfs- und Zusatzstoffen C) und anschließendes Vermahlen der homogenen Mischung auf eine mittlere Teilchengröße d₅₀ von unter 100 µm erhalten wurde,
bei einer Temperatur von 20 bis 70°C trocken vermischt, gegebenenfalls anschließend bei einer Temperatur von 20 bis 80°C verpresst und/oder kompaktiert und die gegebenenfalls so erhaltene Masse wieder zu einem Pulver einer mittleren Teilchengröße d₅₀ von unter 100 µm vermahlt.

Gegenstand der Erfindung ist schließlich auch die Verwendung der so erhaltenen Pulverlacke zur Beschichtung beliebiger hitzeresistenter Substrate nach den Methoden der Pulverlacktechnologie.

Die erfindungsgemäßen Pulverlacke enthalten eine monomerenarme Polyisocyanatkomponente A) auf Basis cycloaliphatischer Diisocyanate, die unterhalb 40° C fest und oberhalb 120° C flüssig ist und in mikronisierter Form vorliegt, d. h. eine mittlere Teilchengröße d₅₀ von unter 10 µm aufweist.

Bei dieser Polyisocyanatkomponente A) handelt es sich beispielsweise um die an sich bekannten Allophanat-, Biuret-, Isocyanurat-, Uretdion- und/oder Urethangruppen enthaltenden Polyisocyanate auf Basis cycloaliphatischer Diisocyanate mit einem Gehalt an freien Isocyanatgruppen von 5 bis 23, vorzugsweise 12 bis 18 Gew.-%, einer mittleren NCO-Funktionalität von mindestens 2,1, vorzugsweise mindestens 2,4, besonders bevorzugt mindestens 3,0 und einem Gehalt an monomeren Diisocyanaten von weniger als 0,5 Gew.-%, vorzugsweise maximal 0,3 Gew.-%, die insbesondere einen nach der Differential-Thermoanalyse (DTA) bestimmten Schmelzpunkt bzw. Schmelzbereich aufweisen, der innerhalb eines Temperaturbereiches von 40 bis 110° C, besonders bevorzugt innerhalb des Temperaturbereiches von 50 bis 100° C liegt.

Geeignete Ausgangsdiisocyanate zur Herstellung der Polyisocyanate A) sind beliebige cycloaliphatische Diisocyanate, wie z. B. 1-Isocyanato-3,3,5-trimethyl-5-isocyanatomethylcyclohexan (Isophorondiisocyanat; IPDI), 2,4'- und 4,4'-Diisocyanatodicyclohexylmethan, 1,3- und 1,4-Diisocyanatocyclohexan, 2(4)-Methyl-1,3-diisocyanatocyclohexan, 1,3- und 1,4-Diisocyanatomethylcyclohexan, 1-Isocyanato-1-methyl-4(3)-isocyanatomethylcyclohexan sowie beliebige Mischungen dieser Diisocyanate.

Bevorzugt handelt es sich der Polyisocyanatkomponente A) um Isocyanuratgruppen aufweisende Polyisocyanate des IPDI, 2,4'- und/oder 4,4'-Diisocyanatodicyclohexylmethans, ganz besonders bevorzugt um ein Polyisocyanurat des IPDI mit einem Isoeyanatgruppengehalt von 15 bis 18 Gew.-%.

Die Herstellung der festen Polyisocyanatkomponente A) ist an sich bekannt und erfolgt beispielsweise nach den in *"*Laas et al., J. Prakt. Chem. 336, 1994, 185 - 200*"* beschriebenen Verfahren. Geeignete Verfahren sind insbesondere die katalytische Oligomerisierung unter Bildung von Isocyanurat- und/oder Uretdionstrukturen, die Umsetzung mit so genannten Biuretisierungsmitteln, wie z. B. Wasser, zu Biurctcn sowie die Modifizierung mit Alkoholen zu Urethanen und/oder Allophanaten oder die sind.

Verfahren zur Herstellung der besonders geeigneten Isocyanuratgruppen aufweisenden Polyisocyanate finden sich beispielsweise in EP-A-0 003 765, EP-A-0 010 589, EP-A-0 017 998, EP-A-0 047 452, EP-A-0 187 105, EP-A-0 197 864, EP-A-0 330 966 beschrieben.

Im Anschluss an ihre Herstellung durch katalytische Oligomerisierung und/oder Modifizierung cycloaliphatischer Diisocyanate und anschließende Entfernung des nicht umgesetzten überschüssigen monomeren Diisocyanats, beispielsweise durch Extraktion oder vorzugsweise durch Dünnschichtdestillation im Hochvakuum, werden die als Feststoff anfallenden monomerenarmen Polyisocyanate schließlich mit Hilfe geeigneter Mahlverfahren, z. B. in Kugelmühlen, Perlmühlen, Sandmühlen, Scheibenmühlen oder Strahlmühlen, auf eine mittlere Teilchengröße d₅₀ von unter 10 µm, vorzugsweise von unter 5 µm, besonders bevorzugt von unter 2 µm, gemahlen.

Als Komponente B) enthalten die erfindungsgemäßen Pulverlacke eine pulverförmige hydroxyfunktionelle Bindemittelkomponente, die unterhalb von 40° C in fester und oberhalb 130° C in flüssiger Form vorliegt und aus mindestens einem amorphen Polyol B1) und mindestens einem kristallinen oder semi-kristallinen Polyol B2) besteht.

Bei diesen Polyolen B1) und B2) handelt es sich um beliebige aus der Pulverlacktechnologie bekannte Hydroxylgruppen aufweisende Bindemittel, mit einer OH-Zahl von 15 bis 200 mg KOH/g, vorzugsweise von 25 bis 150 mg KOH/g, die ein mittleres (aus der Funktionalität und dem Hydroxylgehalt berechenbares) Molekulargewicht von 400 bis 10000, vorzugsweise von 1000 bis 5000 aufweisen.

Geeignete amorphe Polyole B1) sind beispielsweise hydroxyfunktionelle Polyester, Polyacrylate oder Polyurethane, wie sie z. B. in der EP-A 0 0 45 998, der EP-A 0 254 152 oder der WO 91/07452 auf Seite 8, Zeile 3 bis 29 als Pulverlackbindemittel exemplarisch beschrieben sind, die auch in beliebiger Mischung untereinander eingesetzt werden können.

Bevorzugt handelt es sich bei der Polyolkomponente B1) um hydroxylgruppenhaltige Polyester der genannten Art oder um beliebige Mischungen solcher Polyesterpolyole, die Erweichungstemperaturen (Tg) aufweisen, die - bestimmt nach der Differential-Thermoanalyse (DTA) - innerhalb des Temperaturbereiches von 40 bis 120° C, besonders bevorzugt innerhalb des Temperaturbereiches von 45 bis 110° C, liegen.

Geeignete kristalline oder semi-kristalline Polyole B2) sind insbesondere Polyesterpolyole, wie sie beispielsweise in der WO 91/07452 von Seite 8, Zeile 30 bis Seite 11, Zeile 25 oder der WO 2005/105879 von Seite 11, Zeile 6 bis Seite 12, Zeile 7 beschrieben sind oder beliebige Mischungen solcher Polyesterpolyole. Bevorzugt besitzen diese kristallinen oder semi-kristallinen Polyesterpolyole B2) Schmelzpunkte (nach DTA) im Bereich von 30 bis 130° C, besonders bevorzugt im Bereich von 40 bis 100° C.

Bei den gegebenenfalls mit zu verwendenden Hilfs- und Zusatzmitteln C) handelt es sich beispielsweise um Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone, Pigmente, wie z.B. Titandioxid, oder auch Farbstabilisatoren gegen die Gefahr der Überbrennvergilbung, wie z.B. gegebenenfalls inerte Substituenten aufweisende Trialkyl- und/oder Triarylphosphite, wie Triethylphosphit, Triisodecylphosphit, Triphenylphosphit oder Trisnonylphenylphosphit. Die Hilfs- und Zusatzmittel werden in der Regel der Bindemittelkomponente A) zugemischt.

Zur Herstellung der hydroxyfunktionellen Bindemittelkomponente B) wird mindestens ein amorphes Polyol B1) der genannten Art mit mindestens einem kristallinen oder semi-kristallinen Polyol B2) der genannten Art in einem Gewichtsverhältnis von B1) zu B2) von 25 : 75 bis 75 : 25, vorzugsweise von 30 : 70 bis 70 : 30, und gegebenenfalls weiteren aus der Pulverlacktechnologie bekannten Hilfs- und Zusatzmittel C) beispielsweise auf Extrudern oder Knetern bei Temperaturen oberhalb des Schmelzbereichs der Einzelkomponenten, beispielsweise bei 80 bis 140° C, vorzugsweise bei 80 bis 120° C, zu einem homogenen Material vereinigt. Der nach Abkühlen der Schmelze resultierende Feststoff wird anschließend auf eine mittlere Teilchengröße d₅₀ von unter 100 µm gemahlen und durch Sieben von den Kornanteilen oberhalb 0,1 mm befreit.

Zur Herstellung des fertigen Pulverlackes werden das mikronisierte Polyisoycanat A) und die gegebenenfalls weiterer Hilfs- und Zusatzmittel C) enthaltende pulverförmige Bindemittelkomponete B) bei einer Temperatur von 20 bis 70° C trocken miteinander vermischt. Dies kann in aus der Pulverlacktechnologie bekannten, zur Homogenisierung von Dryblend-Mischungen geeigneten handelsüblichen Mischapparaturen, beispielsweise in einem MTI Mischer Typ LM 5/3,5 der Firma Mischtechnik Industrieanlagen GmbH (Detmold, Deutschland), erfolgen.

Gegebenenfalls wird das erhaltene Pulver anschließend bei einer Temperatur von 20 bis 80° C und einem Druck im Bereich von 10 - 300 bar verpresst und/oder kompaktiert, beispielsweise in handelsüblichen Walzenkompaktoren, z. B. solchen vom Typ RC der Firma Powtec Maschinen und Engineering GmbH (Remscheid, Deutschland), und die dabei resultierende Masse ein weiteres mal zu einem Pulver einer mittleren Teilchengröße d₅₀ von unter 100 µm vermahlen.

Eine weitere Möglichkeit zur Herstellung der erfindungsgemäßen Pulverlacke besteht darin, das mikronisierte Polyisoycanat A) in einem marktüblichen Bondingprozess (z. B. Blitz^{®} Bonding, Benda-Lutz Werke GmbH, Österreich), wie er üblicherweise zur Herstellung von Effektpigmentpulverlacke genutzt wird, an die gegebenenfalls weitere Hilfs- und Zusatzmittel C) enthaltende pulverförmige Bindemittelkomponete B) anzubinden.

Unabhängig von der Art der Herstellung kommen im erfindungsgemäßen Pulverlack die Komponenten A) und B) in solchen Mengenverhältnissen zum Einsatz, dass für jede Hydroxylgruppe der Komponente B) 0,6 bis 1,5, vorzugsweise 0,8 bis 1,2, Isocyanatgruppen der Komponente A) zur Verfügung stehen.

Die so hergestellten erfindungsgemäßen Pulverlacke sind in der Regel bei Raumtemperatur völlig lagerstabil. Sie können selbst bei erhöhter Temperatur, z. B. bei 40° C, über einen längeren Zeitraum, wie z. B. 3 Monate, ohne erkennbare Veränderungen gelagert werden.

Die erfindungsgemäßen Pulverlacke können nach üblichen Pulverauftragsverfahren, wie z.B. elektrostatisches Pulverversprühen oder Wirbelsintern, auf die zu überziehenden Substrate aufgebracht werden. Die Härtung der Überzüge gelingt bereits bei deutlich niedrigeren Temperaturen als für die bisher bekannten Polyurethanpulverlacke erforderlich sind, beispielsweise durch Erhitzen auf Temperaturen von 80 bis 140° C, vorzugsweise 80 bis 120°C beispielsweise während eines Zeitraums von ca. 10 bis 30 Minuten. Man erhält harte und elastische tief matte Überzüge.

Mit Hilfe der erfindungsgemäßen Polyisocyanatgemische hergestellte Pulverlacke weisen eine hohe Licht- und Wetterbeständigkeit auf, und sind somit für Außenanwendungen besonders geeignet.

Erfindungsgemäß können beliebige hitzeresistente Substrate, wie beispielsweise solche aus Glas oder Metallen, beschichtet werden. Die außerordentlich niedrigen Einbrenntemperaturen erschließen für die erfindungsgemäßen Polyurethanpulverlacke darüber hinaus aber auch völlig neue Anwendungsgebiete, wie z. B. die Beschichtung von Kunststoffen oder Holzsubstraten.

Die nachfolgenden Beispiele dienen zur weiteren Erläuterung der Erfindung.

### Beispiele

Alle Prozentangaben beziehen sich, soweit nichts Anderslautendes vermerkt, auf das Gewicht.

Die Bestimmung der NCO-Gehalte erfolgte nach DIN EN ISO 11909.

Als Maß für die Reaktivität der Pulverlackformulierungen wird die Gelierzeit, bestimmt nach DIN 55 990, Teil 8, Punkt 5.1, angegeben.

Zur Charakterisierung der mechanischen Eigenschaften der ausgehärteten Lackfilme wurden Erichsentiefung nach DIN EN ISO 1520 und Reverse Impact (Kugelschlagprüfung) nach ASTM D2794 bestimmt.

Glanzgrade wurden nach DIN 67530, jeweils im Reflexionswinkel 20° und 60°, gemessen.

### Ausgangsverbindungen

### Mikronisiertes Polyisocyanat A I)

Isophorondiisocyanat (IPDI) wird entsprechend Beispiel 2 der EP-A 0 003 765 bis zu einem NCO-Gehalt von 31,1 % trimerisiert und das überschüssige IPDI durch Dünnschichtdestillation bei 170° C/0,1 mbar entfernt. Man erhält ein Isocyanuratpolyisocyanat als nahezu farbloses Festharz mit einem NCO-Gehalt von 16,4 % und einem Gehalt an monomerem IPDI von < 0,2 %.

Dieses Festharz, das eine Tg von ca. 65° C aufweist, wird bei 25° C unter trockenem Stickstoff mit Hilfe einer Fließbettgegenstrahlmühle TYP 400 TFG (Fa. Hosokawa Alpine AG, Augsburg) auf eine mittlere Teilchengröße d₅₀ von ca. 1,2 µm vermahlen.

### Mikronisiertes Polyisocyanat A II)

2620 g 4,4'-Diisocyanatodicyclohexylmethan werden mit 10 g einer 10 %igen Lösung von N,N,N-Trimethyl-N-(2-hydroxypropyl)ammoniumhydroxid (hergestellt durch Umsetzung von Trimethylamin mit Propylenoxid in Methanol, gelöst in 2-Ethyl-1,3-hexandiol : 1,3-Butandiol = 4:1) versetzt und bei 75 bis 80° C bis zu einem NCO-Gehalt von 26,8 % trimerisiert. In Abmischung mit 15 Gew.-Teilen des nach Beispiel 12 der EP 330 966 erhaltenen Isocyanuratpolyisocyanats auf Basis von Hexamethylendiisocyanat (HDI) erhält man nach Dünnschichtdestillation bei 200° C/0,15 mbar 100 Gew.-Teile eines fahlgelben Festharzes mit einem NCO-Gehalt von 15,1 % und einem Gehalt an monomeren Diisocyanaten von < 0,2 %.

Dieses Festharz, das eine Tg von ca. 56° C aufweist, wird bei 25° C unter trockenem Stickstoff mit Hilfe einer Fließbettgegenstrahlmühle TYP 400 TFG (Fa. Hosokawa Alpine AG, Augsburg) auf eine mittlere Teilchengröße d₅₀ von ca. 1,2 µm vermahlen.

### Pulverförmiges, nicht mikronisiertes Polyisocyanat (V I)

Das zur Herstellung des mikronisierten Polyisocyanats A I) eingesetzte IPDI-Trimerisat mit einem NCO-Gehalt von 16,4 % und einem Gehalt an monomerem IPDI von < 0,2 % wurde mit Hilfe einer Sichtermühle ACM II (Fa. Hosokawa Mikropul) mit einem 90 µm Sieb gemahlen und gesiebt.

### Amorphes Polyesterpolyol B1)

Hydroxylgruppenhaltiger Polyester, hergestellt aus 47,3 Gew.-Teilen Terephthalsäure, 44,6 Gew.-Teilen Neopentylglykol, 2,9 Gew.-Teilen Adipinsäure und 5,2 Gew.-Teilen Trimellitsäureanhydrid.

| | |
|---|---|
| OH-Zahl: | 40 mg KOH/g |
| Säurezahl: | 13 mg KOH/g |
| Schmelzbereich (DTA): | 58 bis 62°C |

### Kristallines Polyesterpolyol B2)

Hydroxylgruppenhaltiger Polyester, hergestellt aus 65,1 Gew.-Teilen Dodecandisäure und 34,9 Gew.-Teilen Hexandiol.

| | |
|---|---|
| OH-Zahl: | 30 mg KOH/g |
| Säurezahl: | 1 mg KOH/g |
| Schmelzpunkt (DTA): | ca. 40° C |

### Beispiel 1 (erfindungsgemäß und Vergleich)

| | |
|---|---|
| 27,1 Gew.-Teile | des amorphen Polyesterpolyols B1) wurden mit |
| 27,1 Gew.-Teilen | der kristallinen Polyesterpolyols B2), entsprechend einem Gewichtsverhältnis von B1) zu B2) von 50 : 50, |

sowie als Hilfs- und Zusatzmittel C) mit

| | |
|---|---|
| 1,5 Gew.-Teilen | eines handelsüblichen Verlaufsmittels (Resiflow^{®} PV 88, Fa. Worlée-Chemie, Hamburg, Deutschland), |
| 0,5 Gew.-Teilen | Benzoin und |
| 35,0 Gew.-Teilen | eines Weißpigmentes (Kronos^{®} 2160, Fa. Kronos Titan, Leverkusen, Deutschland) |

gründlich gemischt und anschließend mit Hilfe eines Buss Cokneters vom Typ PLK 46 bei 150 U/min und einer Gehäusetemperatur von 40° C im Einzugsbereich sowie an der Welle bzw. von 80° C im Verfahrensteil homogenisiert, wobei Massetemperaturen von 95 bis 100° C erreicht wurden. Die erstarrte Schmelze wurde mit Hilfe einer Sichtermühle ACM II (Fa. Hosokawa Mikropul) mit einem 90 µm Sieb gemahlen und gesiebt.

Die so erhaltene pulverförmige Bindemittelkomponente B), die bereits Hilfs- und Zusatzmittel C) enthält, wird bei 25° C in einem MTI Mischer Typ LM 5/3,5 (Firma Mischtechnik Industrieanlagen GmbH, Detmold, Deutschland), 30 s bei 2000 U/min mit 8,8 Gew.-Teilen des mikronisierten Polyisocyanates A I), entsprechend einem Äquivalentverhältnis von NCO zu OH von 1 : 1 gemischt. Man erhielt einen erfindungsgemäßen Pulverlack mit einer Gelierzeit von 56 s bei 160° C.

Zum Vergleich wurde auf die gleiche Weise durch trockenes Mischen aus 91,2 Gew.-Teilen der vorstehend beschriebenen pulverförmigen, Hilfs- und Zusatzmittel C) enthaltenden Bindemittelkomponente B) und 8,8 Gew.-Teilen der pulverförmigen Polyisocyanatkomponente V I) ein Pulverlack hergestellt. Das Äquivalentverhältnis von NCO zu OH lag wie im vorstehend beschriebenen erfindungsgemäßen Pulverlack bei 1 : 1. Es wurde eine Gelierzeit von 82 s bei 160° C gemessen.

Die beiden so erhaltenen Pulverlacke wurden mit einer ESB-Becherpistole bei einer Hochspannung von 70 KV auf entfettete Stahlbleche gespritzt und 15 min bei einer Temperatur von 100° C ausgehärtet.

Im Falle des erfindungsgemäßen Pulverlacks erhielt man eine voll vernetzte, tief matte Beschichtung mit sehr gutem Verlauf. Bei einer Schichtdicke von ca. 60 µm wurde ein Glanzgrad (20°/60°) von 1,4 / 4,4 gemessen. Der Reverse Impact betrug 60 inch pounds. Im Falle des unter Verwendung des pulverförmigen, nicht mikronisierten Polyisocyanates V I) hergestellten Pulverlackes wurde eine raue, völlig inhomogene und nicht geschlossene Beschichtung erhalten.

Zur Überprüfung der Lagerstabilität wurde der erfindungsgemäße Pulverlack 4 Wochen bei einer Temperatur von 40° C gelagert. Anschließend betrug die Gelierzeit des weiterhin rieselfähigen Pulvers 61 s bei 160° C. Ein 15 min bei 100° C ausgehärteter Lackfilm zeigte im Vergleich zur aus dem frisch hergestellten, d. h. nicht gelagerten Pulverlack erhaltenen Beschichtung ein praktisch unverändertes Eigenschaftsprofil.

### Beispiele 2 bis 5 (erfindungemäß)

### Beispiele 6 bis 8 (Vergleich)

Nach dem in Beispiel 1 beschriebenen Verfahren wurden ausgehend von pulverförmigen Bindemittelkomponenten B) und mikronisierten Polyisocyanaten A) als Vernetzern weiß pigmentierte Pulverlacke hergestellt und mit einer ESB-Becherpistole bei einer Hochspannung von 70 KV auf entfettete Stahlbleche gespritzt. Die Lacke wurden anschließend jeweils 15 min bei 120° C eingebrannt. Die nachfolgende Tabelle zeigt die Zusammensetzungen (Gew.-Teile) der Pulverlacke sowie die lacktechnischen Daten der daraus erhaltenen Beschichtungen.

In allen Fällen werden matte Beschichtungen erhalten. Die Beispiele belegen jedoch, dass nur die erfindungsgemäßen Pulverlacke 2 bis 5, in denen das beanspruchte Verhältnis von amorpher Polyolkomponente B1) zu kristalliner oder semikristalliner Polyolkomponente B2) eingehalten wird, zu vollvernetzten Beschichtungen mit guten optischen und mechanischen Eigenschaften aushärten.

| Beispiel | 2 | 3 | 4 | 5 | 6 (Vergleich) | 7 (Vergleich) | 8 (Vergleich) |
|---|---|---|---|---|---|---|---|
| Polyisocyanat AI) | - | 9,2 | 8,3 | 8,1 | 9,5 | 9,7 | 7,6 |
| Polyisocyanat A II) | 9,4 | - | - | - | - | - | - |
| Polyesterpolyol B1) | 26,8 | 40,3 | 18,0 | 13,7 | 48,1 | 53,3 | - |
| Polyesterpolyol B2) | 26,8 | 13,5 | 36,7 | 41,2 | 5,4 | - | 55,4 |
| Resiflow^{®} PV 88 | 1,5 | 1,5 | 1,5 | 1,5 | 1,5 | 1,5 | 1,5 |
| Benzoin | 0,5 | 0,5 | 0,5 | 0,5 | 0,5 | 0,5 | 0,5 |
| Kronos^{®} 2160 | 35,0 | 35,0 | 35,0 | 35,0 | 35,0 | 35,0 | 35,0 |
| B1) : B2) | 50 : 50 | 75 : 25 | 67: 33 | 25 : 75 | 90 : 10 | 100 : 0 | 0 : 100 |
| Äquivalentverhältnis NCO : OH | 1 : 1 | 1 : 1 | 1 : 1 | 1 : 1 | 1 : 1 | 1 : 1 | 1 : 1 |
| Schichtdicke [µm] | 72 | 67 | 81 | 82 | 55 | 73 | 85 |
| Erichsentiefung [mm] | > 9,0 | > 9,0 | 8,1 | 5,6 | 1,4 | < 1,0 | < 1,0 |
| Glanz (20° /60°) | 1,4/5,9 | 2,8/14 | 1,6/5,3 | 1,6/5,6 | 2,4/12 | 3,0/15 | 3,5/23 |
| Verlauf visuell | sehr gut | sehr gut | sehr gut | gut | gut | schlecht | gut |
| Acetontest | gut | gut | ausreichend | ausreichend | schlecht | schlecht | ausreichend |
| Gelzeit @ 160° C [s] | 56 | 179 | 76 | 45 | 296 | 39 | > 300 |
| Gelzeit @ 160C nach 4 Wochen @ 40° C [s] | 64 | 185 | 82 | 54 | > 300 | 47 | > 300 |
| Rieselfähigkeit nach 4 Wochen @ 40° C | sehr gut | sehr gut | sehr gut | sehr gut | sehr gut | sehr gut | sehr gut |

## Patentansprüche

1. Pulverlacke, enthaltend
A) ein unblockiertes mikronisiertes Polyisocyanat auf Basis cycloaliphatischer Diisocyanate, das unterhalb 40° C fest und oberhalb 120° C flüssig ist und eine mittlere Teilchengröße d₅₀ von unter 10 µm aufweist,
B) eine pulverförmige Bindemittelkomponente einer mittleren Teilchengröße d₅₀ von unter 100 µm, bestehend zu 25 bis 75 Gew.-% aus mindestens einem amorphen Polyol B1) und zu 75 bis 25 Gew.-% aus mindestens einem kristallinen oder semi-kristallinen Polyol B2),
sowie gegebenenfalls
C) weitere aus der Pulverlacktechnologie bekannte Hilfs- und Zusatzstoffe.

2. Pulverlacke gemäß Anspruch 1, **dadurch gekennzeichnet, dass** als Polyisocyanatkomponente A) ein Polyisocyanurat auf Basis von Isophorondiisocyanat, 4,4'- und/- oder 4,2'-Diisocyanatodicyclohexylmethan eingesetzt wird.

3. Pulverlacke gemäß Anspruch 1, **dadurch gekennzeichnet, dass** als Polyisocyanatkomponente A) ein Polyisocyanurat auf Basis von Isophorondiisocyanat mit einem Isocyanatgruppengehalt von 15 bis 18 Gew.-% eingesetzt wird.

4. Pulverlacke gemäß Anspruch 1, **dadurch gekennzeichnet, dass** die Polyisocyanatkomponente A) eine mittlere Teilchengröße d₅₀ von unter 5 µm aufweist.

5. Pulverlacke gemäß Anspruch 1, **dadurch gekennzeichnet, dass** es sich bei der Bindemittelkomponente B1) um mindestens ein amorphes Polyesterpolyol mit einer Erweichungstemperatur (Tg) innerhalb des Temperaturbereiches von 40 bis 120° C handelt.

6. Pulverlacke gemäß Anspruch 1, **dadurch gekennzeichnet, dass** es sich bei der Bindemittelkomponente B2) um mindestens ein kristallines oder semi-kristallines Polyesterpolyol mit einem Schmelzpunkt im Bereich von 30 bis 130° C handelt.

7. Verfahren zur Herstellung von Pulverlacken gemäß Anspruch 1, **dadurch gekennzeichnet, dass** man
A) ein unblockiertes mikronisiertes Polyisocyanat auf Basis cycloaliphatischer Diisocyanate, das unterhalb 40° C fest und oberhalb 120° C flüssig ist und eine mittlere Teilchengröße d₅₀ von unter 10 µm aufweist, mit
B) einer pulverförmigen hydroxyfunktionellen Bindemittelkomponente, die durch Vermischen und gemeinsames Homogenisieren mindestens eines amorphen Polyols B1) mit mindestens einem kristallinen oder semi-kristallinen Polyol B2) in einem Gewichtsverhältnis von B1) zu B2) von 25 : 75 bis 75 : 25, gegebenenfalls unter Mitverwendung weiterer aus der Pulverlacktechnologie bekannter Hilfs- und Zusatzstoffen C) und anschließendes Vermahlen der homogenen Mischung auf eine mittlere Teilchengröße d₅₀ von unter 100 µm erhalten wurde,
bei einer Temperatur von 20 bis 70° C trocken vermischt, gegebenenfalls anschließend bei einer Temperatur von 20 bis 80° C verpresst und/oder kompaktiert und die gegebenenfalls so erhaltene Masse wieder zu einem Pulver einer mittleren Teilchengröße d₅₀ von unter 100 µm vermahlt.

8. Verfahren gemäß Anspruch 7, **dadurch gekennzeichnet, dass** die Komponenten A) und B) in solchen Mengenverhältnissen zum Einsatz kommen, dass für jede Hydroxylgruppe der Komponente B) 0,6 bis 1,5 Isocyanatgruppen der Komponente A) zur Verfügung stehen.

9. Verwendung der Pulverlacke gemäß Ansprüche 1 bis 6 zur Beschichtung beliebiger Substrate nach den Methoden der Pulverlacktechnologie.

10. Substrate, beschichtet mit Polymerfilmen erhältlich aus Pulverlacken gemäß Ansprüchen 1 bis 6.

## Claims

1. Powder coating materials comprising
A) a non-blocked micronized polyisocyanate based on cycloaliphatic diisocyanates which is solid below 40°C and liquid above 120°C and has an average particle size d₅₀ of below 10 µm,
B) a binder component in powder form with an average particle size d₅₀ of below 100 µm, consisting of 25% to 75% by weight of at least one amorphous polyol B1) and of 75% to 25% by weight of at least one crystalline or semi-crystalline polyol B2),
and optionally
C) further auxiliaries and adjuvants known from powder coating technology.

2. Powder coating materials according to Claim 1, **characterized in that** use is made as polyisocyanate component A) of a polyisocyanurate based on isophorone diisocyanate, 4,4'- and/or 4,2'-diisocyanatodicyclohexylmethane.

3. Powder coating materials according to Claim 1, **characterized in that** use is made as polyisocyanate component A) of a polyisocyanurate based on isophorone diisocyanate, having an isocyanate group content of 15% to 18% by weight.

4. Powder coating materials according to Claim 1, **characterized in that** the polyisocyanate component A) has an average particle size d₅₀ of below 5 µm.

5. Powder coating materials according to Claim 1, **characterized in that** the binder component B1) is at least one amorphous polyester polyol having a softening temperature (Tg) within the temperature range from 40 to 120°C.

6. Powder coating materials according to Claim 1, **characterized in that** the binder component B2) comprises at least one crystalline or semi-crystalline polyester polyol having a melting point in the range from 30 to 130°C.

7. Process for producing powder coating materials according to Claim 1, **characterized in that**
A) a non-blocked micronized polyisocyanate based on cycloaliphatic diisocyanates which is solid below 40°C and liquid above 120°C and has an average particle size d₅₀ of below 10 µm is dry-mixed with
B) a hydroxy-functional binder component in powder form, obtained by mixing and jointly homogenizing at least one amorphous polyol B1) with at least one crystalline or semi-crystalline polyol B2) in a weight ratio of B1) to B2) of 25:75 to 75:25, optionally with accompanying use of further auxiliaries and adjuvants C) known from powder coating technology, and subsequent grinding of the homogeneous mixture to an average particle size d₅₀ of below 100 µm,
at a temperature of 20 to 70°C, and the mixture optionally is subsequently pressed and/or compacted at a temperature of 20 to 80°C, and the material optionally thus obtained is ground again to a powder with an average particle size d₅₀ of below 100 µm.

8. Process according to Claim 7, **characterized in that** the components A) and B) are employed in proportions such that for each hydroxyl group of component B) there are 0.6 to 1.5 isocyanate groups of component A) available.

9. Use of the powder coating materials according to Claims 1 to 6 for coating any desired substrates in accordance with the methods of powder coating technology.

10. Substrates coated with polymer films obtainable from powder coating materials according to Claims 1 to 6.

## Revendications

1. Peintures en poudre, contenant
A) un polyisocyanate micronisé non bloqué, à base de diisocyanates cycloaliphatiques, qui est solide au-dessous de 40°C et liquide au-dessus de 120°C et présente une taille moyenne de particule d₅₀ inférieure à 10 µm,
B) un composant liant pulvérulent ayant une taille moyenne de particule d₅₀ inférieure à 100 µm, constitué à raison de 25 à 75 % en poids d'au moins un polyol amorphe B1) et à raison de 75 à 25 % en poids d'au moins un polyol cristallin ou semi-cristallin B2),
ainsi qu'éventuellement
C) d'autres adjuvants et additifs connus d'après la technologie des peintures en poudre.

2. Peintures en poudre selon la revendication 1, **caractérisées en ce qu'**on utilise comme composant polyisocyanate A) un polyisocyanurate à base d'isophorone-diisocyanate, de 4,4'- et/ou 4,2'-diisocyanatodicyclohexylméthane.

3. Peintures en poudre selon la revendication 1, **caractérisées en ce qu'**on utilise comme composant polyisocyanate A) un polyisocyanurate à base d'isophorone-diisocyanate ayant une teneur en groupes isocyanate de 15 à 18 % en poids.

4. Peintures en poudre selon la revendication 1, **caractérisées en ce que** le composant polyisocyanate A) présente une taille moyenne de particule d₅₀ inférieure à 5 µm.

5. Peintures en poudre selon la revendication 1, **caractérisées en ce que** le composant liant B1) consiste en un polyesterpolyol amorphe ayant une température de ramollissement (Tg) dans la plage de température allant de 40 à 120°C.

6. Peintures en poudre selon la revendication 1, **caractérisées en ce que** le composant liant B2) consiste en au moins un polyesterpolyol cristallin ou semi-cristallin ayant un point de fusion dans la plage allant de 30 à 130°C.

7. Procédé pour la production de peintures en poudre selon la revendication 1, **caractérisé en ce qu'**on mélange à sec, à une température de 20 à 70°C
A) un polyisocyanate micronisé non bloqué, à base de diisocyanates cycloaliphatiques, qui est solide au-dessous de 40°C et liquide au-dessus de 120°C et présente une taille moyenne de particule d₅₀ inférieure à 10 µm, avec
B) un composant liant pulvérulent à fonction hydroxy, qui a été obtenu par mélange et homogénéisation conjointe d'au moins un polyol amorphe B1) avec au moins un polyol cristallin ou semi-cristallin B2) en un rapport pondéral de B1) à B2) de 25 : 75 à 75 : 25, éventuellement avec utilisation simultanée d'autres adjuvants et additifs C) connus d'après la technologie des peintures en poudre et broyage subséquent du mélange homogène jusqu'à une taille moyenne de particule d₅₀ inférieure à 100 µm,
éventuellement ensuite on presse et/ou compacte à une température de 20 à 80°C et on broie de nouveau la masse éventuellement ainsi obtenue en une poudre ayant une taille moyenne de particule d₅₀ inférieure à 100 µm.

8. Procédé selon la revendication 7, **caractérisé en ce que** les composants A) et B) sont utilisés en des proportions telles que pour chaque groupe hydroxy du composant B) est disponible 0,6 à 1,5 groupe isocyanate du composant A).

9. Utilisation des peintures en poudre selon les revendications 1 à 6 pour le revêtement de subjectiles quelconques selon les méthodes de la technologie des peintures en poudre.

10. Subjectiles, revêtus avec des feuils de polymère pouvant être obtenus à partir des peintures en poudre selon les revendications 1 à 6.
